# FASCICULE DE BREVET EUROPEEN

(11) **EP 2 097 652 B1**
(45) Date de publication et mention de la délivrance du brevet: **21.03.2012**
(21) Numéro de dépôt: 07866523.9
(22) Date de dépôt: 30.10.2007
(51) Int. Cl.: F16D 13/64

(54) **DISQUE DE FRICTION D'EMBRAYAGE**
KUPPLUNGSREIBUNGSSCHEIBE
CLUTCH FRICTION DISK

(30) Priorité: 30.10.2006 FR 0654637
(43) Date de publication de la demande: 09.09.2009
(73) Titulaire: Valeo Matériaux de Friction, 87020 Limoges (FR)
(72) Inventeur: ADAMCZAK, Loïc, 87140 Roussac (FR); WALTER, Philippe, 87270 Couzeix (FR); DUNO, Erick, 87100 Limoges (FR); VIOLA, Paolo, 80260 Naours (FR)
(74) Mandataire: Jeuland, Mickaël
(86) Numéro de dépôt international: PCT/FR2007/052282
(87) Numéro de publication internationale: WO 2008/053125

(56) Documents cités:
- DE-A1- 4 226 763
- US-A- 4 697 683
- US-A- 4 993 531

## Description

La présente invention se rapporte à un disque de friction d'embrayage à sec, notamment pour véhicule automobile. De manière usuelle, un disque de friction d'embrayage est destiné à être monté sur un arbre dit mené en étant inséré entre un plateau de réaction et un plateau de pression d'un embrayage solidaire en rotation d'un arbre dit menant. Lors d'une opération d'embrayage, ledit plateau de pression serre le disque de friction contre ledit plateau de réaction.

Bien que pouvant s'appliquer à tout type de disque de friction, l'invention présente un intérêt particulier pour un disque de friction d'embrayage dit progressif.

Un disque de friction d'embrayage progressif, comme par exemple représenté aux figures 7 et 8 du brevet FR 1 304 067, comprend un support métallique en forme de couronne sensiblement plane, couramment dénommé « le voile », dont la périphérie externe est fragmentée de manière à présenter des ailettes solidaires de, ou rapportées sur, ladite couronne.

Ces ailettes sont alternativement pliées de manière à comporter des portions décalées, de part et d'autre d'un plan moyen, susceptibles d'être déformées élastiquement sous l'effet d'un effort de serrage.

Une garniture de frottement en forme de couronne est rapportée de chaque côté dudit support en étant fixée par tout moyen approprié sur certaines desdites portions décalées.

Au cours du serrage, les ailettes se déforment élastiquement, les portions décalées venant à se rapprocher les unes des autres.

Il en résulte un effet de progressivité dans le serrage du disque de friction et par conséquent dans la transmission du couple de rotation au cours d'une manoeuvre d'embrayage, ce qui permet de diminuer considérablement les à-coups.

De manière à augmenter leur élasticité, lesdites ailettes présentent des découpes et ajours.

En fonctionnement, les garnitures de frottement sont soumises à un échauffement sensible susceptible d'en diminuer la dureté en surface.

Sous l'effet de l'effort de serrage auquel sont soumises les garnitures, ces dernières sont alors fréquemment l'objet d'un phénomène d'incrustation desdites ailettes dans les garnitures, qui provoque une perte d'élasticité et par conséquent de progressivité.

On a déjà proposé pour éviter cet inconvénient d'interposer une pièce intercalaire, notamment un feuillard ou clinquant en acier, collée à chaque garniture entre la garniture et lesdites ailettes.

Une telle disposition qui est visible aux figures 7 et 8 du brevet français 1 304 067 précité, donne satisfaction.

On constate qu'une telle disposition, bien qu'avantageuse en terme de résistance à l'incrustation, conduit à ajouter plusieurs étapes pour réaliser un disque de friction avec une telle pièce intercalaire entre la garniture et le voile, notamment du fait de l'introduction d'une étape de collage de ladite pièce intercalaire sur la garniture qui constitue une étape onéreuse tant en terme de produits (colles) à mettre en oeuvre que de temps pour la réaliser.

Il a été proposé de remplacer ce collage par un (FR-A1- 2 694 794) l'utilisation de matière issue de la pièce intercalaire, pour un pré-assemblage avec la garniture avant fixation de l'ensemble voile - pièce intercalaire - garniture de frottement par rivetage. Là encore, une étape supplémentaire de pré-asemblage doit avoir lieu, qui est pénalisante.

Le but de la présente invention est de remédier aux inconvénients ci-dessus et de proposer un disque de friction plus économique à réaliser. Ce but est atteint par un disque de friction d'embrayage à sec selon la revendication 1.

Un tel disque de friction est significativement moins onéreux à produire que les disques de friction décrits plus haut, dans l'état de la technique.

Les inventeurs ont constaté de manière surprenante et contrairement aux enseignements communément admis, qu'il est ainsi possible d'assembler directement les garnitures, la pièce intercalaire et le voile, sans mettre en péril les qualités du disque de friction quand on réunit les différents composants par des seuls rivets.

On entend par « assembler par des seuls rivets », un assemblage où les rivets sont seuls actifs dans les transferts d'efforts entre composants de l'assemblage, excluant ainsi que des composants soient collés entre eux. Cela exclut bien entendu aussi que l'on utilise de la matière de la pièce intercalaire pour un pré-assemblage des garnitures et de la dite pièce intercalaire.

On entend généralement par « faces de lamage de la garniture de frottement » des surfaces adaptées à recevoir une tête de rivet, notamment des surfaces sensiblement plates ou coniques, au contact desquelles on peut disposer une tête de rivet, notamment respectivement plate ou conique. Ces surfaces de lamage sont généralement obtenues en fraisant la garniture de manière à y créer un perçage avec une partie de petit diamètre dans laquelle le corps du rivet peut se déplacer et une partie de plus grand diamètre dont une extrémité comprend la surface de lamage pour recevoir la tête du rivet. La partie de plus grand diamètre est généralement fraisée de manière à ce que la tête du rivet soit encastrée dans la garniture à l'état neuf. Auprès sertissage du rivet, l'essentiel de la surface de lamage est ainsi généralement en contact avec l'essentiel de la surface d'appui de la tête de rivet.

On a pu démontrer que de tels disques de friction sont particulièrement bien adaptés pour des applications à des embrayages accouplés à des moteurs diesels, dans lesquels la charge au plateau, et donc la pression sur les garnitures, sont élevées.

On a montré que de tels disques de friction répondaient avec succès aux contraintes de centrifugations de telles applications.

Selon des modes de réalisation de l'invention, pris séparément ou en combinaison :
- la pièce intercalaire est une tôle métallique ;
- la pièce intercalaire est une couronne de dimensions sensiblement égales à celles de la garniture de frottement ;
- le voile comprend des zones de progressivité ;
- les zones de progressivité comprennent des ailettes susceptibles de déformations élastiques axiales ;
- le voile comprenant les ailettes est découpé et formé dans une tôle.
- les ailettes sont rapportées sur une tôle préalablement découpée et formée pour constituer le voile.

L'invention concerne également un procédé de fabrication d'un disque de friction d'embrayage à sec comprenant un voile, au moins une garniture de frottement et une pièce intercalaire entre le voile et la garniture de frottement où :
- on approvisionne les composants suivants : le voile, la ou les garniture(s) de frottement, la ou les pièce(s) intercalaire(s) ;
- on assemble simultanément lesdits composants par des seuls rivets dont une extrémité prend appui sur des faces de lamage de la (des) garniture(s) de frottement.

L'invention sera détaillée ci-après à l'aide d'exemples non limitatifs illustrés par les figures suivantes :
- Figure 1 : dessin schématique d'un disque de friction ;
- Figure 2a : vue schématique en coupe selon A-A de composants avant montage d'un disque de friction selon l'invention ;
- Figure 2b : vue schématique en coupe selon A-A de composants assemblés d'un disque de friction selon l'invention ;
- Figure 3 : vue schématique en coupe selon B-B de composants assemblés d'un disque de friction selon l'invention.

Pour raisons de clarté, les dimensions des différents éléments représentés dans ces figures ne sont pas en proportion avec leurs dimensions réelles. Sur toutes les figures, des références identiques correspondent à des éléments identiques.

Dans le cadre de l'invention, les termes « axial », « axialement » et « radial », « radialement » sont définis en relation avec l'axe de rotation du disque de friction. « Axial » s'entend comme visant une direction parallèle à cet axe de rotation et « radial » s'entend comme visant une direction perpendiculaire à cet axe et passant par cet axe.

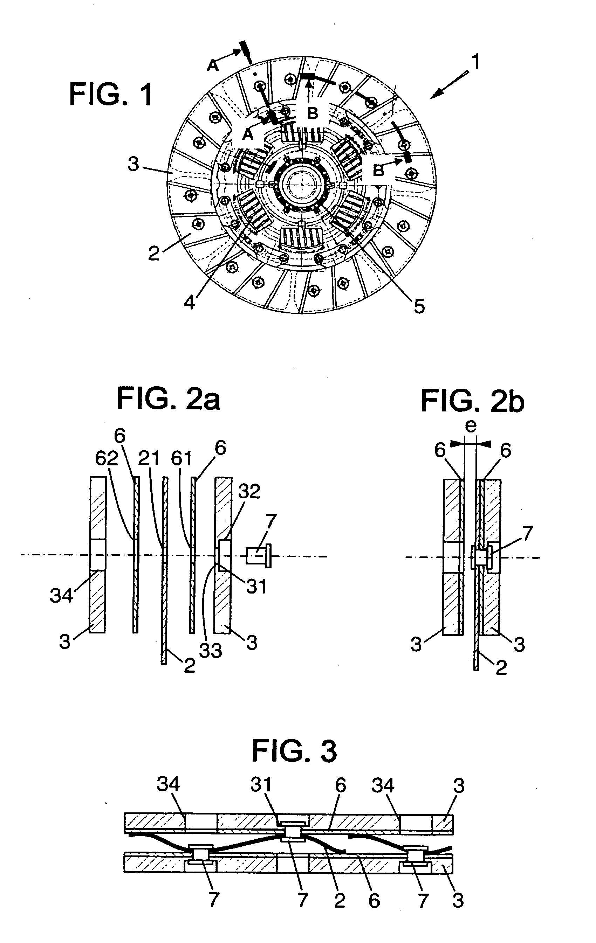

La figure 1 représente une vue schématique de face d'un disque de friction 1 comprenant un moyeu 5 susceptible d'être solidarisé avec un arbre mené, une garniture de frottement ( ou garniture de friction) 3 et représente en pointillés un voile 2. Des moyens élastiques, notamment des ressorts 4, sont disposés afin de permettre l'amortissement et/ou la filtration des vibrations de l'arbre menant vers l'arbre mené.

La figure 2 présente une coupe; selon A-A de la figure 1, d'un disque de friction selon l'invention, où les composants apparaissent disposés avant montage en figure 2a et après montage en figure 2b. Une pièce intercalaire 6 est disposée de chaque côté du voile 2, entre ledit voile et une garniture 3. La garniture comprend des trous fraisés avec une partie 32 suffisamment large pour recevoir une tête de rivet 7 et une partie plus étroite 33 pour permettre le déplacement du corps de rivet sans autoriser le passage de la tête de rivet. En fond de la partie la plus large 32 se trouve une face de lamage 31 sur laquelle peut venir s'appuyer la tête de rivet. La partie de la pièce intercalaire 6 destinée à être en contact avec la zone du trou 33 de la garniture comprend également un trou 61 de même diamètre, de même que le voile 2 qui comprend un trou 21. La pièce intercalaire 6 et la garniture 3 situées de l'autre côté du voile 2 comprennent des trous respectivement 62 et 34 susceptibles de laisser passer une tête de rivet. On sertit un rivet 7 pour solidariser sans collage ni autre étape de pré-assemblage la garniture, la pièce intercalaire et le voile en disposant une tête de ce rivet d'un côté en contact avec la face de lamage 31 et en disposant l'autre tête de ce rivet au voile, le corps du rivet traversant les trous 33, 61, 21.

Après assemblage, une distance e entre les deux pièces intercalaires résulte de la présence de zones de progressivité dans le voile 2, notamment sous la forme d'ailettes déformables élastiquement axialement. De telles ailettes apparaissent en pointillés en figure 1 et sont présentées en coupe en figures 2 et 3.

En l'espèce, les ailettes sont rapportées sur une tôle préalablement découpée et formée pour constituer le voile 2.

La figure 3 présente une coupe schématique, selon B-B de la figure 1, du même disque de friction que représenté en figure 2. On voit aisément que le voile 2 comprend des ailettes dont une partie est en contact glissant avec une première pièce intercalaire 6, une seconde partie est fixée à la seconde pièce intercalaire 6, une troisième partie à la première pièce intercalaire 6 et une quatrième partie est en contact glissant avec la seconde pièce intercalaire 6. Il en résulte, selon cette vue, une forme ondulée de cette zone du voile qui permet d'assurer la progressivité du disque de friction.

L'invention ne se limite pas à ces types de réalisation et doit être interprétée de façon non limitative,

## Revendications

1. Disque de friction d'embrayage à sec comprenant un voile (2), au moins une garniture de frottement (3) solidarisée au voile (2) par des rivets (7) et une pièce intercalaire (6) entre le voile (2) et la garniture de frottement (3), ledit disque de friction étant **caractérisé en ce que** le voile (2), la ou les garniture (s) de frottement (3), la ou les pièce(s) intercalaire(s) (6) sont maintenus assemblés seulement par lesdits rivets (7) dont une extrémité prend appui sur des faces de lamage (31) de la (des) garniture(s) de frottement (3).

2. Disque de friction d'embrayage selon la revendication précédente **caractérisé en ce que** la pièce intercalaire (6) est une tôle métallique.

3. Disque de friction d'embrayage selon l'une quelconque des revendications précédente, **caractérisé en ce que** la pièce intercalaire (6) est une couronne de dimensions sensiblement égales à celles de la garniture de frottement (3).

4. Disque de friction d'embrayage selon l'une quelconque des revendications précédentes **caractérisé en ce que** le voile (2) comprend des zones de progressivité.

5. Disque de friction d'embrayage selon la revendication précédente **caractérisé en ce que** les zones de progressivité comprennent des ailettes susceptibles de déformations élastiques axiales.

6. Disque de friction d'embrayage salon la revendication précédente **caractérisé en ce que** le voile (2) comprenant les ailettes est découpé et formé dans une tôle.

7. Disque de friction d'embrayage selon la revendication 5 **caractérisé en ce que** les ailettes sont rapportées sur une tôle préalablement découpée et formée pour constituer le voile (2).

8. Procédé de fabrication d'un disque de friction d'embrayage à sec comprenant un voile (2), au moins une garniture de frottement (3) est une pièce intercalaire (6) entre le voile (2) et la garniture de frottement (3), ledit procédé étant **caractérisé en ce que** :
- on approvisionne les composants suivants : le voile (2), la ou les garniture(s) de frottement (3), à ou les pièce(s) intercalaire(s) (6),
- on assemble simultanément lesdites composants par des seuls rivets (7) dont une extrémité prend appui sur des faces de lamage (31) de la (des) garniture(s) de frottement (3).

## Claims

1. Dry clutch friction disc comprising a ring (2), at least one friction lining (3) which is rendered integral with the ring (2) by rivets (7), and a part (6) which is interposed between the ring (2) and the friction lining (3), the said friction disc being **characterised in that** the ring (2), the friction lining(s) (3), and the interposed part(s) (6) are kept assembled only by the said rivets (7), one end of which is supported on countersink surfaces (31) of the friction lining(s) (3).

2. Clutch friction disc according to the preceding claim, **characterised in that** the interposed part (6) is a metal plate.

3. Clutch friction disc according to either of the preceding claims, **characterised in that** the interposed part (6) is a crown with dimensions which are substantially equal to those of the friction lining (3).

4. Clutch friction disc according to any one of the preceding claims, **characterised in that** the ring (2) comprises areas of progressivity.

5. Clutch friction disc according to the preceding claim, **characterised in that** the areas of progressivity comprise fins which can be subjected to axial resilient deformations.

6. Clutch friction disc according to the preceding claim, **characterised in that** the ring (2) comprising the fins is cut out and formed from a plate.

7. Clutch friction disc according to claim 5, **characterised in that** the fins are added onto a previously cut out and formed plate in order to form the ring (2).

8. Method for production of a dry clutch friction disc comprising a ring (2), at least one friction lining (3), and a part (6) which is interposed between the ring (2) and the friction lining (3), the said method being **characterised in that**:
- the following components are provided: the ring (2), the friction lining(s) (3), and the interposed part(s) (6); and
- the said components are assembled simultaneously only by rivets (7), one end of which is supported on the countersink surfaces (31) of the friction lining(s) (3).

## Patentansprüche

1. Reibungsscheibe einer Trockenkupplung, umfassend einen Flansch (2), mindestens einen durch Niete (7) am Flansch (2) befestigten Reibbelag (3) und ein Zwischenstück (6) zwischen dem Flansch (2) und dem Reibbelag (3), wobei die Reibungsscheibe **dadurch gekennzeichnet ist, dass** der Flansch, der Reibbelag oder die Reibbeläge (3), das oder die Zwischenstück(e) (6) nur durch die besagten Niete (7) zusammengefügt bleiben, von denen ein Ende auf Senkungsflächen (31) des Reibbelags (der Reibbeläge) (3) aufliegt.

2. Kupplungsreibungsscheibe nach dem vorangehenden Anspruch, **dadurch gekennzeichnet, dass** das Zwischenstück (6) ein metallisches Blech ist.

3. Kupplungsreibungsscheibe nach einem der vorangehenden Ansprüche, **dadurch gekennzeichnet, dass** das Zwischenstück (6) ein Kranz mit Abmessungen ist, welche in etwa gleich denen des Reibbelags (3) sind.

4. Kupplungsreibungsscheibe nach einem der vorangehenden Ansprüche, **dadurch gekennzeichnet, dass** der Flansch (2) Progressivitätszonen umfasst.

5. Kupplungsreibungsscheibe nach dem vorangehenden Anspruch, **dadurch gekennzeichnet, dass** die Progressivitätszonen für axiale elastische Verformungen empfängliche Flügel umfassen.

6. Kupplungsreibungsscheibe nach dem vorangehenden Anspruch, **dadurch gekennzeichnet, dass** der die Flügel umfassende Flansch (2) in ein Blech gestanzt und geformt ist.

7. Kupplungsreibungsscheibe nach Anspruch 5, **dadurch gekennzeichnet, dass** die Flügel an ein zuvor gestanztes und geformtes Blech angestückt sind, um den Flansch (2) zu bilden.

8. Verfahren zur Herstellung einer Reibungsscheibe einer Trockenkupplung, die einen Flansch (2), mindestens einen Reibbelag (3) und ein Zwischenstück (6) zwischen dem Flansch (2) und dem Reibbelag (3) umfasst, wobei das Verfahren **dadurch gekennzeichnet ist, dass**:
- die folgenden Komponenten beschickt werden: der Flansch (2), der Reibbelag oder die Reibbeläge (3), das oder die Zwischenstück(e) (6),
- gleichzeitig die besagten Komponenten nur durch Niete (7) zusammengefügt werden, von denen ein Ende auf Senkungsflächen (31) des Reibbelags (der Reibbeläge) (3) aufliegt.
